# EUROPÄISCHE PATENTANMELDUNG

(11) **EP 4 509 439 A1**
(43) Veröffentlichungstag der Anmeldung: **19.02.2025**
(21) Anmeldenummer: 23191953.1
(22) Anmeldetag: 17.08.2023
(51) Int. Cl.: B65G 43/08, B65G 47/52, B65G 37/00

(54) **ÜBERGABESTATION FÜR LASTEN IN LOGISTIKEINRICHTUNGEN**

(71) Anmelder: Jungheinrich Aktiengesellschaft, 22047 Hamburg (DE)
(72) Erfinder: GETHER, Joachim, 8263 Großwilfersdorf (AT)
(74) Vertreter: Weickmann & Weickmann PartmbB

(57) **Zusammenfassung**

Die vorliegende Erfindung betrifft eine Übergabestation (100) für Lasten in Logistikeinrichtungen, umfassend wenigstens zwei Übergabeplätze (102, 104) unterschiedlicher Typen für Lasten, welche derart eingerichtet sind, dass eine jeweilige Aufnahme und Abgabe einer Last durch ein Lastentransportfahrzeug (200, 300) eines zugeordneten Fahrzeugtyp ermöglicht ist, eine Fördereinheit (108), welche dazu eingerichtet ist, Lasten zwischen den wenigstens zwei Übergabeplätzen (102, 104) zu transportieren und ein autarkes elektrisches System mit einer Steuereinheit (110), welches dazu eingerichtet ist, von außerhalb mit elektrischer Energie versorgt zu werden und den Betrieb der Fördereinheit (108) selbsttätig zu steuern.

## Beschreibung

Die vorliegende Erfindung betrifft eine Übergabestation für Lasten in Logistikeinrichtungen, ein System, gebildet aus einer derartigen Übergabestation und wenigstens zwei Lastentransportfahrzeugen unterschiedlicher Typen sowie ein Verfahren zum Betreiben eines derartigen Systems.

In Logistikeinrichtungen kommen häufig unterschiedliche Typen von Lastentransportfahrzeugen zum Einsatz, die unterschiedliche Aufgaben erfüllen bzw. unterschiedliche Bereiche der Anlage befahren und zwischen welchen zu transportierende Lasten übergeben werden müssen. Beispielsweise kommen in der Praxis Szenarien vor, in welchen in einem ersten Bereich eines Lagers Objekte, wie beispielsweise beladene Paletten, von Unterfahr-Shuttlen transportiert werden und anschließend für eine Einlagerung in ein Hochregal von einem entsprechenden Schmalgangfahrzeug bzw. Regalbediengerät übernommen werden und umgekehrt. Hierbei können beispielsweise die genannten Fahrzeugtypen jeweils automatisiert sein und durch ein einzelnes Lagerverwaltungssystem gesteuert und überwacht werden, wobei jedoch auch Varianten denkbar sind, in welchen wenigstens eines der Fahrzeuge von einem menschlichen Bediener gesteuert wird. Allgemein ausgedrückt kann der horizontale Transport einer Ware in einem derartigen Logistikumfeld mittels eines ersten Fahrzeugtyps erfolgen, während eine Einlagerung der entsprechenden Ware in ein Regal sowie in ähnlicher Weise eine Auslagerung aus dem Regal dann von einem anderen Fahrzeugtyp mit Hubgerüst übernommen wird.

Derartige unterschiedliche Fahrzeugtypen zeichnen sich jedoch auch dadurch aus, dass sie entsprechende Objekte in unterschiedlicher Weise aufnehmen und tragen, beispielsweise in dem eben beschriebenen Anwendungsfall eines Unterfahr-Shuttles und eines Schmalgangstaplers, indem Unterfahr-Shuttle entsprechende Lasten auf einer höhenverlagerbaren Lasttrageplattform an ihrer Oberseite tragen und zum Aufnehmen unterfahren, während Schmalgangfahrzeuge mit entsprechenden Hubgerüsten mit Lastaufnahmemitteln versehen sind, wie beispielsweise Lasttragegabeln, die in Palettentaschen eingefahren werden können, um diese aufzunehmen.

Hierbei zeigt sich, dass eine direkte Übergabe entsprechender Waren zwischen den unterschiedlichen Fahrzeugtypen in der Regel aufgrund der unterschiedlichen Lastaufnahmemittel nicht möglich oder zumindest ineffizient ist, da in derartigen Fällen die genannten Fahrzeuge jeweils aufeinander warten müssten, bevor eine Übergabe der Lasten stattfinden kann. Wenngleich im Rahmen des eben angesprochenen Beispiels Unterfahr-Shuttle und Regalbediengeräte als mögliche Typen von Fahrzeugen genannt worden sind, zwischen welchen eine derartige Übergabe von Lasten bewerkstelligt werden muss, so sind jedoch in ähnlicher Weise auch Fälle denkbar, in welchen beispielsweise eine manuelle Abgabe von Lasten mittels gewöhnlicher personengeführter Gabelstapler und eine anschließende Aufnahme durch Regalbediengeräte oder ähnliches durchzuführen sind. Hierbei ist zu beachten, dass insbesondere bei der Verwendung eines Unterfahr-Shuttles als Fahrzeugtyp ein einfaches Abstellen der Last, beispielsweise einer Palette, nicht möglich ist. Die Last muss also direkt an ein anderes Fahrzeug oder in ein Gestell übergeben werden.

Zwar sind für derartige Zwecke bereits Übergabestationen eingesetzt worden, welche es unterschiedlichen Typen von Fahrzeugen jeweils ermöglichen, darauf Lasten abzustellen bzw. derartige Lasten davon aufzunehmen, solche statischen Übergabestationen mit einem einzelnen Übergabeplatz sind jedoch rein passive Bauelemente in einer Logistikeinrichtung und können nicht zu einer verbesserten und effektiveren Handhabung von Lasten beitragen.

Es ist demzufolge die Aufgabe der vorliegenden Erfindung, eine Übergabestation für Lasten in Logistikeinrichtungen bereitzustellen, welche in einer einfachen und verglichen mit dem bekannten Stand der Technik effizienteren Weise eine Übergabe von Lasten zwischen unterschiedlichen Typen von Fahrzeugen ermöglicht und hierbei dennoch unabhängig betrieben werden kann, d.h. ohne dass eine Integration in ein übergeordnetes Lagerverwaltungssystem oder ähnliches notwendig wäre.

Zur Lösung dieser Aufgabe und zu diesem Zweck umfasst die erfindungsgemäße Übergabestation für Lasten in Logistikeinrichtungen wenigstens zwei Übergabeplätze unterschiedlicher Typen für Lasten, welche derart eingerichtet sind, dass eine jeweilige Aufnahme und Abgabe einer Last durch ein Lastentransportfahrzeug eines zugeordneten Fahrzeugtyp ermöglicht ist, eine Fördereinheit, welche dazu eingerichtet ist, Lasten zwischen den wenigstens zwei Übergabeplätzen zu transportieren, und ein autarkes elektrisches System mit einer Steuereinheit, welches dazu eingerichtet ist, von außerhalb mit elektrischer Energie versorgt zu werden und den Betrieb der Fördereinheit selbsttätig zu steuern.

Dementsprechend wird durch die erfindungsgemäße Übergabestation eine Vorrichtung bereitgestellt, welche es unterschiedlichen Fahrzeugtypen ermöglicht, Lasten von ihnen zugeordneten Übergabeplätzen eines entsprechenden Typs aufzunehmen oder auf ihnen abzustellen, während die Fördereinheit ferner dafür sorgt, dass die entsprechenden Lasten zwischen den wenigstens zwei Übergabeplätzen transferiert werden kann. Ferner ist durch das Vorsehen des autarken elektrischen Systems gewährleistet, dass die zugehörige Steuereinheit auch ohne eine Anbindung an ein übergeordnetes Verwaltungssystem den Betrieb der Übergabestation in der gewünschten Weise steuern und sicherstellen kann. Dementsprechend kann die erfindungsgemäße Übergabestation als "standalone"-Lösung mit "plug and play"-Funktionalität verstanden werden.

Im Unterschied zu bekannten Fördereinrichtungen mit Übergabestationen, die aufwendig in ein Lagersystem und das zugehörige Lagerverwaltungssystem integriert werden müssen, erlaubt die erfindungsgemäße Übergabestation eine denkbar einfache Integration in ein bestehendes Lagersystem, indem die Station am Betriebsort aufgebaut wird und nach dem Anschluss an die Energieversorgung sofort einsatzbereit ist. Insbesondere ist vorgesehen, dass die Übergabestation keine Steuer- oder Sensorsignale für ihren Betrieb benötigt, die nicht durch die integrierte Steuereinheit oder Sensoren der Übergabestation selbst bereitgestellt werden. Es besteht also keine Notwendigkeit für einen Anschluss an Signalleitungen zu weiteren Instanzen.

Hierbei kann die Fördereinheit der erfindungsgemäßen Übergabestation insbesondere durch einen Kettenförderer mit durchgehenden Ketten gebildet sein, wobei je nach Betriebsrichtung des Kettenförderers die Last jeweils in unterschiedlichen Richtungen zwischen den einzelnen Übergabeplätzen transferiert werden kann.

Ferner kann die Fördereinheit der Übergabestation einen Motor mit Schützsteuerung umfassen, vorzugsweise ohne Frequenzumformer oder elektronische Steuerung, wodurch eine besonders robuste Ausgestaltung der elektrischen Funktionalität der Übergabestation bei geringem konstruktivem Aufwand gewährleistet werden kann.

Ferner kann jedem der Übergabeplätze der erfindungsgemäßen Übergabestation ein Belegungssensor zugeordnet sein, welcher dazu eingerichtet ist, an die Steuereinheit Daten zu liefern, welche anzeigen, ob der entsprechende Übergabeplatz durch eine Last belegt ist. Hierdurch kann eine Fehlfunktion der Übergabestation verhindert werden, beispielsweise indem die Fördereinheit durch die Steuereinheit nicht in Betrieb genommen wird, solange eine Last an einem Übergabeplatz befindlich ist, zu welchem hin gleichzeitig eine weitere Last transferiert werden sollte. Derartige Belegungssensoren können beispielsweise durch geeignete Lichtschrankeneinheiten oder beispielsweise auch durch Gewichtssensoren gebildet sein, welche jeweils dazu geeignet sind, die Anwesenheit einer Last an einem vorgegebenen Ort zu bestimmen, in diesem Fall dem entsprechenden Übergabeplatz.

Alternativ oder zusätzlich kann die erfindungsgemäße Übergabestation wenigstens einen Umgebungssensor umfassen, beispielsweise ausgeführt als Ultraschallsensor, Lichtschranke oder kapazitiver Sensor, welcher dazu eingerichtet ist, an die Steuereinheit Daten zu liefern, welche anzeigen, ob in der Umgebung von wenigstens einem der Übergabeplätze ein Lastentransportfahrzeug vorliegt. Auch dieses Vorsehen von wenigstens einem Umgebungssensor dient in der vorliegenden Erfindung als Sicherheitsmaßnahme, da hierdurch beispielsweise sichergestellt werden kann, dass die Fördereinheit erst dann in Betrieb genommen wird, wenn sich innerhalb des Erfassungsbereichs des entsprechenden wenigstens einen Umgebungssensors kein Lastentransportfahrzeugt mehr befindet, sodass auch in derartigen Situationen mögliche Fehlfunktionen von vornherein ausgeschlossen werden können. Insbesondere kann so verhindert werden, dass die Übergabestation einen Transport startet, bevor das Fahrzeug den Absetzvorgang oder Aufnahmevorgang für eine Last abgeschlossen hat.

Weiterhin kann die erfindungsgemäße Übergabestation wenigstens einen Positionssensor umfassen, beispielsweise ausgeführt durch eine Lichtschranke, welcher dazu eingerichtet ist, während eines Transports einer Last ein Erreichen einer vorgesehenen Lastposition anzuzeigen. Durch das Vorsehen eines derartigen Positionssensors kann sichergestellt werden, dass eine entsprechende Last stets zuverlässig an eine exakt vorgegebene Position an einem der Übergabeplätze antransportiert wird, wobei beispielsweise Ungenauigkeiten ausgeglichen werden können, die bei einem nicht vollständig exakten Abstellen der Last an einem der anderen Übergabeplätze durch ein entsprechendes Fahrzeug auftreten können.

In diesem Zusammenhang kann die Übergabestation ferner eine Zeitgabe-Einheit umfassen, welche dazu eingerichtet ist, bei einem Erreichen des Positionssensors durch eine Last eine vorbestimmte Nachlauf-Zeitgabe auszulösen, während welcher die Fördereinheit weiterhin betrieben wird. Hierdurch wird eine freiere Positionierung des Positionssensors ermöglicht, insbesondere muss dieser nicht unbedingt an einer Position angeordnet werden, an welcher die entsprechende Last unmittelbar während eines Transfervorgangs zwischen zwei Übergabeplätzen zum Stehen kommen soll, sondern er kann auch um einen gewissen Abstand von dieser vorgesehenen Position der Last versetzt sein, wobei auf Grundlage der vorbestimmten Nachlauf-Zeitgabe der entsprechende Abstand ausgeglichen werden kann.

Wie bereits weiter oben angedeutet, kann die erfindungsgemäße Übergabestation ferner insbesondere dazu eingerichtet sein, eine Übergabe von Lasten zwischen einem Unterfahr-Shuttle und einem Regalbediengerät und/oder einem Schmalgangstapler zu ermöglichen, sodass wenigstens einer der Übergabeplätze derart eingerichtet sein kann, dass eine darauf getragene Last durch ein Unterfahr-Shuttle unterfahrbar ist bzw. durch ein Unterfahr-Shuttle eine Last darauf absetzbar ist, und/oder wenigstens einer der Übergabeplätze kann derart eingerichtet sein, dass eine darauf getragene Last durch ein Regalbediengerät und/oder einen Schmalgangstapler aufnehmbar ist bzw. durch ein Regalbediengerät und/oder einen Schmalgangstapler eine Last darauf absetzbar ist. Wie ebenfalls bereits weiter oben angedeutet, können die entsprechenden Unterfahr-Shuttle, Regalbediengeräte und/oder Schmalgangstapler jeweils als autonome Flurförderzeuge ausgeführt sein.

Weiterhin kann wenigstens einer der Übergabeplätze mit einem Anschlag versehen sein, welcher dazu eingerichtet ist, als Anlage für eine Last in einer korrekten Pose für eine Aufnahme durch ein Lastentransportfahrzeug zu dienen. Hierbei zeichnet der Begriff der "Pose" sowohl die Position als auch die Orientierung der entsprechenden Last, wobei als entsprechender Anschlag beispielsweise eine längliche Stange oder ein Kantblech eingesetzt werden kann, welches sowohl die Position als auch die Orientierung der entsprechenden Last nach einem Transfer durch die Fördereinheit festlegen kann.

Alternativ oder zusätzlich kann die erfindungsgemäße Übergabestation ferner wenigstens eine Zwischenposition umfassen, welche an dem Transportweg der Fördereinheit zwischen zwei der Übergabeplätze angeordnet und dazu vorgesehen ist, eine Last zeitweilig aufzunehmen. Hierbei bezeichnet die Zwischenposition jedoch nicht lediglich eine beliebige Position einer während eines Transfervorgangs momentan in Bewegung befindlichen Last zwischen zwei der Übergabeplätze, sondern ausdrücklich eine weitere Position, in welcher eine Last für eine längere Zeit zwischengelagert werden kann, bevor sie zu einem der Übergabeplätze weitergeführt wird. Somit kann die Übergabestation als Puffereinheit in einer entsprechenden Logistikeinrichtung wirken, wobei erneut der wenigstens einen Zwischenposition in der oben beschriebenen Weise ein Belegungssensor zugeordnet sein kann, um auch an dieser Stelle sicherzustellen, dass die Fördereinheit nicht in einem Zustand der Übergabestation betrieben wird, in welcher eine der Positionen bereits durch eine Last belegt ist, wodurch es zu Störungen oder Unfällen kommen könnte.

Gemäß einem zweiten Aspekt betrifft die vorliegende Erfindung ein System, gebildet aus einer erfindungsgemäßen Übergabestation der eben beschriebenen Art und wenigstens zwei Lastentransportfahrzeugen unterschiedlicher Typen, welche insbesondere ausgewählt sein können aus einem Unterfahr-Shuttle, einem Regalbediengerät und einem Schmalgangstapler.

Hierbei kann das System ferner ein Lagerverwaltungssystem umfassen, wobei Informationen über von der Übergabestation aufgenommene bzw. von ihr abgestellte Lasten lediglich von den Lastentransportfahrzeugen an das Lagerverwaltungssystem übermittelt werden. Hierdurch ist der jeweilige Belegungszustand der Übergabestation und der daran vorgesehenen Übergabeplätze dem Lagerverwaltungssystem allein dadurch bekannt, dass die entsprechenden Fahrzeuge die Übergabe beziehungsweise Übernahme einer entsprechenden Last von der Übergabestation oder an diese an das Lagerverwaltungssystem gemeldet haben, während die Übergabestation selbst hinsichtlich ihrer Funktion völlig isoliert und autark arbeiten kann. Dementsprechend sind auch keine Datenverbindungen zwischen der Übergabestation und dem Lagerverwaltungssystem notwendig und die Übergabestation selbst kann durch einen einfachen Anschluss an eine Energieversorgung in Betrieb genommen werden, da die zugehörige Steuereinheit auch ohne Dateneingabe von außen bereits die vorgesehenen Betriebsabläufe der Übergabestation anweisen und steuern kann.

Es kann dementsprechend in diesem Zusammenhang lediglich notwendig sein, die Übergabestation in dem Lagerverwaltungssystem derart zu hinterlegen, dass die entsprechenden Lastentransportfahrzeuge in geeigneter Weise mit ihr wechselwirken können, d.h. ihre Position und Funktionalität kennen, jedoch weder eine Kommunikation der Lastentransportfahrzeuge mit der Übergabestation noch des Lagerverwaltungssystems mit der Übergabestation notwendig wird. Die Information, ob eine oder mehrere Lasten momentan an der Übergabestation vorliegen, kann dementsprechend alleine von dem Lagerverwaltungssystem auf Grundlage der hinsichtlich Abgabe- und Übernahmevorgängen von den Lastentransportfahrzeugen gelieferten Informationen abgeleitet werden, wobei dementsprechend das Lagerverwaltungssystem dann bei der Planung weiterer Betriebsabläufe den Beladungszustand der Übergabestation berücksichtigen kann und die entsprechenden Arbeitsaufträge an Lastentransportfahrzeuge hierauf abstimmen kann.

Gemäß einem weiteren Aspekt betrifft die vorliegende Erfindung ein Verfahren zum Betreiben eines derartigen Systems für ein Übergeben einer Last von einem ersten Lastentransportfahrzeug eines ersten Typs zu einem zweiten Lastentransportfahrzeug eines zweiten Typs, umfassend die Schritte eines Absetzens der Last an einem ersten der Übergabeplätze durch das erste Fahrzeug, eines Erfassens der Anwesenheit der Last mittels des dem ersten Übergabeplatz zugeordneten Belegungssensors, eines Betreibens der Fördereinheit zum Transportieren der Last von dem ersten Übergabeplatz in Richtung eines zweiten der Übergabeplätze, sofern der dem zweiten Übergabeplatz zugeordnete Belegungssensor keine dort vorliegende Last erfasst, eines Erfassens eines Erreichens des zweiten Übergabeplatzes durch die Last mittels des Positionssensors, eines Beendens des Betriebs der Fördereinheit, und eines Aufnehmens der Last an dem zweiten Übergabeplatz durch das zweite Lastentransportfahrzeug.

Hierdurch wird ersichtlich, dass allein durch das Erfassen der Anwesenheit oder Abwesenheit einer Last an jeweiligen Übergabeplätzen die vorgesehene Funktionsweise des erfindungsgemäßen Systems ausgeführt werden kann. Ferner sei an dieser Stelle und auch mit Bezug zu möglichen konkreten Ausgestaltungen der erfindungsgemäßen Übergabestation angemerkt, dass der einem der Übergabeplätze zugeordnete Positionssensor gleichzeitig auch die Funktion eines entsprechenden Belegungssensors erfüllen kann, sofern eine entsprechende Montageposition eingehalten wird, die sowohl das Vorliegen einer Last als auch ihre korrekte Positionierung während eines Transfervorgangs sicherstellen kann. Selbstverständlich sind jedoch auch Ausführungsformen denkbar, in welchen die beiden Sensoren durch separate Erfassungseinheiten ausgeführt sind. Ferner sei darauf hingewiesen, dass bei einem Vorsehen der oben beschriebenen Zeitgabe-Einheit das Beenden des Betriebs der Fördereinheit mit einer Verzögerung gemäß der vorbestimmten Nachlauf-Zeitgabe erfolgen kann, nachdem das Erreichen des entsprechenden zweiten Übergabeplatzes durch die Last mittels des Positionssensors erfasst worden ist.

Ferner kann das erfindungsgemäße Verfahren ein Übermitteln von Informationen hinsichtlich des Absetzens der Last an dem ersten Übergabeplatz an das Lagerverwaltungssystem durch das erste Lastentransportfahrzeug umfassen und/oder ein Übermitteln von Informationen hinsichtlich des Aufnehmens der Last an dem zweiten Übergabeplatz an das Lagerverwaltungssystem durch das zweite Lastentransportfahrzeug umfassen. Durch diese Maßnahme wird in der oben beschriebenen Weise die vorteilhafte Integration der Übergabestation in der Logistikeinrichtung hinsichtlich des erfindungsgemäßen Verfahrens im Rahmen eines "standalone"-Betriebs ermöglicht.

Zuletzt kann das erfindungsgemäße Verfahren ferner vor dem Betreiben der Fördereinheit einen Schritt eines Überprüfens der Umgebung des ersten Übergabeplatzes auf eine Abwesenheit des ersten Lastentransportfahrzeugs umfassen, wozu der oben ebenfalls bereits beschriebene Umgebungssensor an dem ersten Übergabeplatz zum Einsatz kommen kann.

Weitere Vorteile und Merkmale der vorliegenden Erfindung werden aus der nachfolgenden Beschreibung einer Ausführungsform davon noch deutlicher werden, wenn diese zusammen mit den beiliegenden Figuren betrachtet wird. Diese zeigen im Einzelnen:
- Fig. 1: eine schematische Ansicht eines erfindungsgemäßen Systems mit einer erfindungsgemäßen Übergabestation und zwei Transportfahrzeugen unterschiedlicher Fahrzeugtypen; und
- Fig. 2a bis 2e: eine schematische Darstellung eines Betriebsablaufs in dem System aus Fig. 1 gemäß einem erfindungsgemäßen Verfahren.

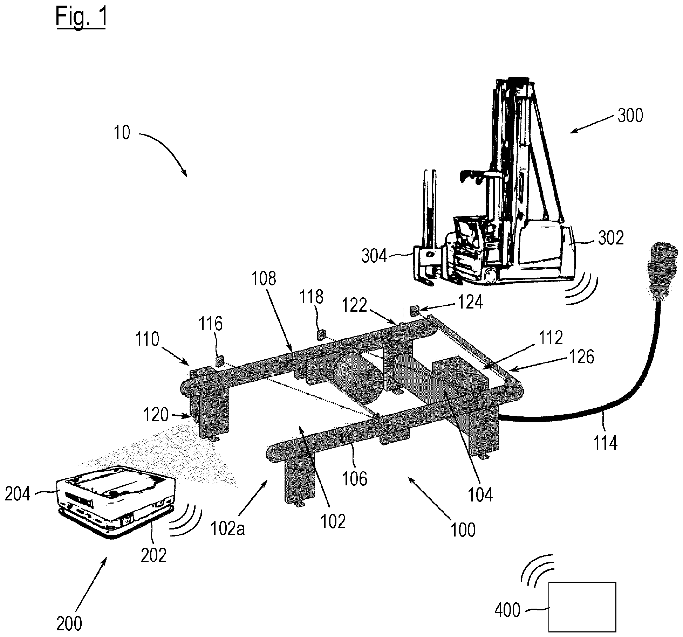

In Figur 1 ist nun zunächst in einer rein schematischen Darstellung ein erfindungsgemäßes System gezeigt und ganz allgemein mit dem Bezugszeichen 10 bezeichnet. Dieses System umfasst eine Übergabestation 100, ein Unterfahr-Shuttle 200 und ein Regalbedienberät 300, wobei das Unterfahr-Shuttle 200 und das Regalbediengerät 300 als Beispiele für unterschiedliche Typen von Lastentransportfahrzeugen zu verstehen sind, welche mit der Übergabestation 100 zu dem System 10 kombinierbar sind.

Hierbei ist das Unterfahr-Shuttle 200 in an sich bekannter Weise mit einem Fahrzeugkörper 202, welcher ein hier nicht weiter dargestelltes Fortbewegungssystem mit einer Mehrzahl von Rädern aufnimmt, und einer gegenüber dem Fahrzeugkörper 202 höhenverlagerbaren Lasttrageplattform 204 ausgebildet, auf welcher während eines Transportbetriebs des Unterfahr-Shuttles 200 eine Last transportiert werden kann, beispielsweise eine mit Objekten beladene Palette. Hierbei erfolgt ein Transportvorgang einer derartigen Last durch das Unterfahr-Shuttle 200 derart, dass die entsprechende Last zunächst einmal in einer geeigneten Übergabestation unterfahren wird und anschließend die Lasttrageplattform 204 vertikal gegenüber dem Fahrzeugkörper 202 nach oben verlagert wird, bis die Last von der Übergabestation abgehoben worden ist. Daraufhin kann die Last auf der Lasttrageplattform 204 liegend von dem Unterfahr-Shuttle 200 zu einer Abgabeposition beziehungsweise einer weiteren Übergabestation transportiert werden.

Demhingegen ist der Schmalgangstapler 300 in ebenfalls an sich bekannter Weise mit einem Fahrzeugkörper 302 und einem Lastaufnahmemittel 304 versehen, welches im hier gezeigten Beispiel als Dreiseiten-Lastgabel mit Seitenschub ausgeführt ist. Dementsprechend ist der Schmalgangstapler 300 insbesondere für das Einlagern und Auslagern von Objekten in Schmalgang-Hochregalen geeignet, wobei sowohl bemannte als auch autonome Varianten derartiger Regalbediengeräte 300 bekannt sind.

Um nun eine Übergabe von zunächst durch das Unterfahr-Shuttle 200 getragenen Objekten, insbesondere Paletten, auf den Schmalgangstapler 300 zu ermöglichen, umfasst das System 10 die angesprochene Übergabestation 100, welche mit zwei Übergabeplätzen 102 und 104 unterschiedlicher Typen versehen ist, wobei der erste Übergabeplatz 102 das Unterfahren beziehungsweise Absetzen einer Last durch das Unterfahr-Shuttle 200 ermöglicht, indem dieses im Abschnitt 102a unter die seitlichen Arme 106 der Übergabestation 100 einfahren kann, während der zweite Übergabeplatz 104 ein Aufnehmen einer entsprechenden Last mittels des Lastaufnahmemittels 304 des Schmalgangstaplers 300 ermöglicht.

Hierbei ist im Bereich des Gestells 106 der Übergabestation 100 eine hier lediglich schematisch dargestellte Fördereinheit 108 in Form eines Kettenförderers mit durchgehenden Ketten sowie einem Motor mit Schützsteuerung vorgesehen, welche je nach Umlaufrichtung der Ketten einen Transfer einer Last von dem ersten Übergabeplatz 102 zu dem zweiten Übergabeplatz 104 und umgekehrt ermöglicht.

Die Steuerung des Betriebs der Fördereinheit 108 wird hierbei durch eine Steuereinheit 110 übernommen, welche in der Darstellung aus Figur 1 in einem Elektronikteil aufgenommen ist, welches ferner Bedienelemente für einen menschlichen Bediener umfasst, wie beispielsweise einen Notaus-Schalter, eine Startautomatik-Taste und eine Möglichkeit zur manuellen Inbetriebnahme der Fördereinheit. Weiterhin umfasst die Übergabestation 100 eine Anschlussbox 112 mit einem Stromkabel 114, wobei in der hier gezeigten Ausführungsform zur Inbetriebnahme der Übergabestation 100 lediglich das Verbinden des Stromkabels 114 mit einem entsprechenden Stromnetz notwendig ist, während keine darüber hinausgehenden Anschlüsse vorzusehen sind, insbesondere keine Datenanschlüsse.

Weiterhin umfasst die Übergabestation 100 zwei Belegungssensoren 116 und 118, welche jeweils dazu eingerichtet sind, an die Steuereinheit 110 Daten zu liefern, welche anzeigen, ob der entsprechende zugeordnete Übergabeplatz 102 beziehungsweise 104 momentan durch eine Last belegt ist. Mögliche Ausführungsbeispiele derartiger Belegungssensoren können Lichtschranken sein, welche bei einem Vorliegen einer Last an dem entsprechenden Übergabeplatz 102 bzw. 104 unterbrochen werden.

Des Weiteren ist an beiden Enden der Übergabestation 10 jeweils ein Umgebungssensor vorgesehen, im vorliegenden Fall an der Seite des ersten Übergabeplatzes 102 ein Ultraschallsensor 120 und an der Seite des zweiten Übergabeplatzes 104 ein kapazitiver Sensor 122, wobei diese beiden Umgebungssensoren 120 und 122 jeweils dazu eingerichtet sind, an die Steuereinheit 110 Daten zu liefern, welche anzeigen, ob in der Umgebung des jeweiligen Übergabeplatzes 102 beziehungsweise 104 momentan ein Lastentransportfahrzeug 200 oder 300 vorliegt oder diese Umgebung frei von Fahrzeugen oder anderen Objekten ist.

Zudem ist im Bereich des zweiten Übergabeplatzes 104 ein Positionssensor 124 in Form einer weiteren Lichtschranke vorgesehen, welcher bei einem Transport einer Last von dem ersten Übergabeplatz 102 zu dem zweiten Übergabeplatz 104 mittels der Fördereinheit 108 ein Erreichen des entsprechenden Übergabeplatzes 104 beziehungsweise einer Endposition des entsprechenden Lastentransfers detektiert und ein entsprechendes Signal an die Steuereinheit 110 liefert, auf dessen Grundlage der Betrieb der Fördereinheit 108 in einem solchen Fall beendet werden kann.

Hierzu kann ferner eine beispielsweise mit der Steuereinheit 110 integrierte Zeitgabe-Einheit vorgesehen sein, die bei einem Erreichen des Positionssensors 124 durch die entsprechende Last eine vorbestimmte Nachlauf-Zeitgabe auslöst, während welcher die Fördereinheit 108 weiter betrieben wird, um der Tatsache Rechnung zu tragen, dass der Positionssensor 124 nicht unmittelbar an dem entsprechenden Ende der Übergabestation 100 angeordnet sondern leicht davon beabstandet ist. An diesem Ende der Übergabestation 100 ist im vorliegenden Fall ferner ein Anschlagselement 126 in Form einer horizontal liegenden Stange vorgesehen, welches als Anlage für eine zu dem zweiten Übergabeplatz transferierte Last wirkt, um deren korrekte Positionierung und Ausrichtung für eine Übernahme durch den Schmalgangstapler 300 sicherzustellen.

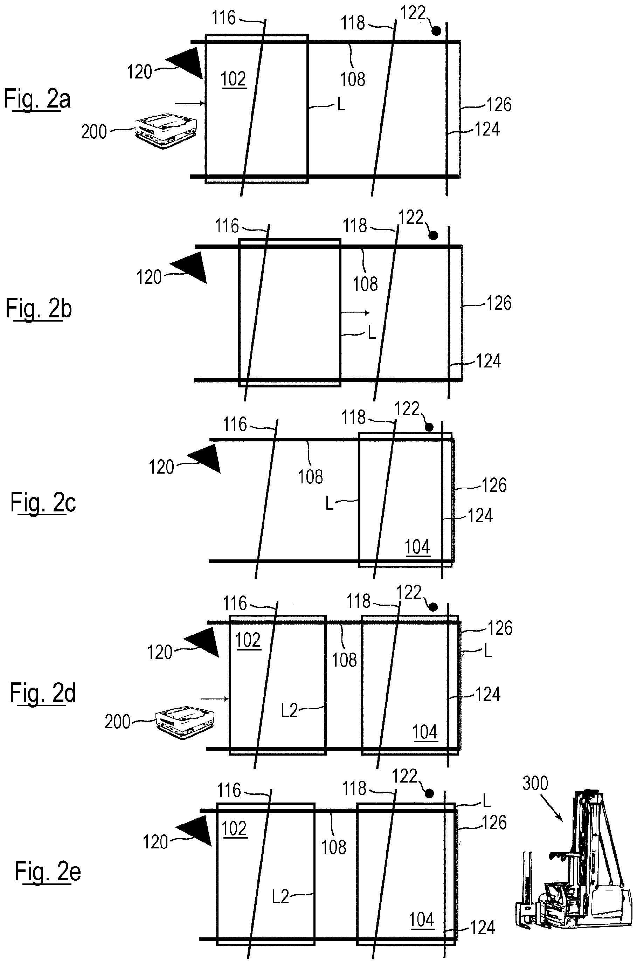

Ein entsprechender Betriebsvorgang eines Transfers einer Last L von dem ersten Übergabeplatz 102 zu dem zweiten Übergabeplatz 104 soll nun anhand der weiteren schematischen Figuren 2a bis 2e schrittweise erläutert sein, wobei im Zustand aus Figur 2a zunächst einmal durch das Unterfahr-Shuttle 200 eine Last L in Form einer Palette an dem ersten Übergabeplatz 102 abgestellt worden ist. Hierbei wird durch den Ultraschallsensor 120 zunächst noch die Anwesenheit des Unterfahr-Shuttles 200 in der Nähe der Übergabestation 100 detektiert und der Betrieb der Fördereinheit 108 solange ausgesetzt, sobald sich das Unterfahr-Shuttle 200 jedoch aus dem Erfassungsbereich des Ultraschallsensors 120 entfernt hat, kann ein sicherer Transfer der Last L von dem ersten Übergabeplatz 102 zu dem zweiten Übergabeplatz 104 beginnen. In gleicher Weise kann parallel durch den kapazitiven Sensor 122 festgestellt werden, dass sich auch in der Nähe des zweiten Übergabeplatzes 104 momentan kein Fahrzeug befindet.

In diesem Zusammenhang wird ferner zunächst einmal von der Steuereinheit 110 auf Grundlage von Daten von dem ersten Belegungssensor 116 die Anwesenheit der Last L an dem ersten Übergabeplatz 102 festgestellt, wodurch der Betriebsvorgang in Gang gesetzt wird, da gleichzeitig mittels des zweiten Belegungssensors 118 sichergestellt wird, dass der zweite Übergabeplatz 104 momentan nicht durch eine Last belegt ist, sodass ein gefahrloser Transfer der Last L von dem ersten Übergabeplatz 102 zu dem zweiten Übergabeplatz 104 möglich ist.

Da nun sämtliche Voraussetzungen für einen sicheren Transfer der Last L erfüllt sind, also sowohl die Abwesenheit eines Fahrzeugs im Bereich des Ultraschallsensors 120 und des kapazitiven Sensors 122 als auch die Abwesenheit einer Last im Bereich des zweiten Belegungssensors 118, wird die Fördereinheit 108 in Betrieb genommen, und die Last L durchläuft den Zustand aus Figur 2b. im Verlauf ihres Transfers tritt die Last L nun aus dem Bereich des Belegungssensors 116 heraus und in den Bereich des zweiten Belegungssensors 118 hinein, und erreicht anschließend den Zustand aus Figur 2c, in welchem durch den Positionssensor 124 das Signal gegeben wird, dass der Betrieb der Fördereinheit 108 zu beenden ist, da die Last L im Bereich des zweiten Übergabeplatzes 104 angekommen ist und gegen das Anschlagelement 126 zur Anlage kommen wird. Hierzu kann durch Verwendung der oben beschriebenen Zeitgabe-Einheit sicherstellt werden, dass der räumliche Abstand zwischen dem Positionssensor 124 und dem Anschlagelement 126 noch dadurch ausgeglichen wird, dass der Betrieb der Fördereinheit 108 nicht unmittelbar bei Erreichen des Positionssensors 124 durch die Last beendet wird, sondern um eine vorbestimmte Nachlauf-Zeitgabe verspätet. Auch kann hierdurch sichergestellt werden, dass eine etwaige leichte Schrägstellung der Last durch das Begenlaufen gegen das Anschlagelement 126 ausgeglichen wird.

Die nun im zweiten Übergabeplatz 104 zu stehen gekommene Last L könnte von nun an prinzipiell durch den Schmalgangstapler 300 übernommen und von der Übergabestation 100 abtransportiert werden. Gleichzeitig könnte jedoch, wie in Figur 2d gezeigt, auch bereits eine zweite Last L2 durch das Unterfahr-Shuttle 200 oder ein weiteres entsprechendes Unterfahr-Shuttle an dem ersten Übergabeplatz 102 abgesetzt werden. Auch in einer solchen Konstellation mit zwei aufgesetzten Lasten L und L2 ist die in Figur 2e schematisch dargestellte Übernahme der zuerst aufgesetzten Last L durch den Schmalgangstapler 300 problemlos möglich, woraufhin dann anschließend mittels des zweiten Belegungssensors 118 festgestellt würde, dass der zweite Übergabeplatz 104 frei geworden ist, sodass das hier angedeutete Verfahren erneut bei dem Zustand aus Figur 2a beginnen kann.

Es sei an dieser Stelle festgehalten, dass ein entsprechender Ablauf selbstverständlich auch in umgekehrter Richtung ablaufen könnte, also ein Transfer einer Last von dem zweiten Übergabeplatz 104 zu dem ersten Übergabeplatz 102 ebenso möglich ist, wobei hierzu lediglich ein entgegengesetzter Betrieb der Fördereinheit 108 und eine entsprechende geeignete Auswertung der von den Belegungssensoren 116 und 118 gelieferten Daten notwendig wäre.

Um die in dem mittels der Figuren 2a bis 2e dargestellten Verfahren notwendige Steuerung bzw. Koordinierung der beteiligten Fahrzeuge 200 und 300 durchführen zu können, stehen diese jeweils mit einem in Figur 1 lediglich schematisch dargestellten Lagerverwaltungssystem 400 in drahtloser Datenverbindung, welches den momentanen Belegungszustand der Übergabestation 100 allein auf Grundlage von Daten überwacht, welche von den beiden Fahrzeugen 200 und 300 geliefert werden, während die Übergabestation 100 selbst keinen Kommunikationskanal zu dem Lagerverwaltungssystem 400 aufweist.

Hierbei kennt das Lagerverwaltungssystem 400 stets den aktuellen Belegungszustand der Übergabestation 100, d.h. es ist bekannt, ob momentan keine, eine oder zwei Lasten an der Übergabestation 100 vorliegen, indem von den Fahrzeugen 200 und 300 jeweils Informationen darüber geliefert werden, ob derartige Lasten an die Übergabestation 100 übergeben worden sind bzw. von ihr abtransportiert worden sind und die entsprechenden Informationen durch das Lagerverwaltungssystem in einem momentanen Belegungszustand der Übergabestation 100 übersetzt werden.

Hierbei kann ferner nach einer Abgabe einer Last durch das Unterfahr-Shuttle 200 an dem ersten Übergabeplatz 102 in einem Zustand, in welchem dem Lagerverwaltungssystem 400 bekannt ist, dass lediglich diese einzelne Last an der Übergabestation 100 vorliegt und eine zweite Last ebenfalls darauf abgestellt werden soll, zunächst einmal eine bestimmte Wartezeit vorgesehen werden, um sicherzustellen, dass der anhand der Figuren 2a und 2c dargestellte Transfer der entsprechenden Last von dem ersten Übergabeplatz 102 zu dem zweiten Übergabeplatz 104 vollständig durchlaufen worden ist, wobei nach dieser Wartezeit von dem Lagerverwaltungssystem 400 davon ausgegangen wird, dass der erste Übergabeplatz 102 nun wieder für die Übernahme einer weiteren Last freigeworden ist, da die zuletzt abgelegte Last automatisch an den zweiten Übergabeplatz 104 transferiert worden ist. In dieser Weise ist dem Lagerverwaltungssystem also nicht nur bekannt, ob und welche Last sich auf der Übergabestation befindet, sondern auch an welcher Position der Übergabestation, also insbesondere ob sich die Last an Übergabeplatz 102 oder 204 befindet.

Nimmt nun, wie in Figur 2e angedeutet, der Schmalgangstapler 300 die entsprechende Last von der Übergabestation 100 ab, so sendet er ebenfalls entsprechende Informationen an das Lagerverwaltungssystem 400, welches dann nach der eben beschriebenen Wartezeit erneut davon ausgeht, dass lediglich an dem zweiten Übergabeplatz 104 eine Last vorliegen wird. Sollte dem hingegen zwischenzeitlich eine zweite Last angeliefert worden sein, die nun im zweiten Übergabeplatz 104 vorliegende Last jedoch ebenfalls von dem Schmalgangstapler 300 abtransportiert worden sein, so kann das Lagerverwaltungssystem 400 auf Grundlage der von dem Schmalgangstapler 300 gelieferten Informationen schließen, dass zwei Lasten angeliefert und auch wieder abtransportiert worden sind, so dass die Übergabestation 100 vollständig leer ist und ein Heranführen von einer oder zwei Lasten mit einer entsprechenden Zeitverzögerung dazwischen zum Transfer dieser Lasten an den zweiten Übergabeplatz 104 möglich sein wird.

## Patentansprüche

1. Übergabestation (100) für Lasten (L) in Logistikeinrichtungen, umfassend:
- wenigstens zwei Übergabeplätze (102, 104) unterschiedlicher Typen für Lasten (L), welche derart eingerichtet sind, dass eine jeweilige Aufnahme und Abgabe einer Last durch ein Lastentransportfahrzeug (200, 300) eines zugeordneten Fahrzeugtyp ermöglicht ist;
- eine Fördereinheit (108), welche dazu eingerichtet ist, Lasten (L) zwischen den wenigstens zwei Übergabeplätzen (102, 104) zu transportieren; und
- ein autarkes elektrisches System mit einer Steuereinheit (110), welches dazu eingerichtet ist, von außerhalb mit elektrischer Energie versorgt zu werden und den Betrieb der Fördereinheit (108) selbsttätig zu steuern.

2. Übergabestation (100) nach Anspruch 1,
wobei die Fördereinheit (108) durch einen Kettenförderer mit durchgehenden Ketten gebildet ist.

3. Übergabestation (100) nach einem der vorhergehenden Ansprüche,
wobei die Fördereinheit (108) einen Motor mit Schützsteuerung umfasst, vorzugsweise ohne Frequenzumformer oder elektronische Steuerung.

4. Übergabestation (100) nach einem der vorhergehenden Ansprüche,
wobei jedem der Übergabeplätze (102, 104) ein Belegungssensor (116, 118) zugeordnet ist, welcher dazu eingerichtet ist, an die Steuereinheit (110) Daten zu liefern, welche anzeigen, ob der entsprechende Übergabeplatz (102, 104) durch eine Last (L) belegt ist.

5. Übergabestation (100) nach einem der vorhergehenden Ansprüche, ferner umfassend wenigstens einen Umgebungssensor (120, 122), beispielsweise ausgeführt als Ultraschallsensor oder kapazitiver Sensor, welcher dazu eingerichtet ist, an die Steuereinheit (110) Daten zu liefern, welche anzeigen, ob in der Umgebung von wenigstens einem der Übergabeplätze (102, 104) ein Lastentransportfahrzeug (200, 300) vorliegt.

6. Übergabestation (100) nach einem der vorhergehenden Ansprüche, ferner umfassend wenigstens einen Positionssensor (124), beispielsweise ausgeführt durch eine Lichtschranke, welcher dazu eingerichtet ist, während eines Transports einer Last (L) ein Erreichen einer vorgesehenen Lastposition anzuzeigen.

7. Übergabestation (100) nach Anspruch 6,
ferner umfassend eine Zeitgabe-Einheit, welche dazu eingerichtet ist, bei einem Erreichen des Positionssensors (124) durch eine Last (L) eine vorbestimmte Nachlauf-Zeitgabe auszulösen, während welcher die Fördereinheit (108) weiterhin betrieben wird.

8. Übergabestation (100) nach einem der vorhergehenden Ansprüche,
wobei wenigstens einer der Übergabeplätze (102) derart eingerichtet ist, dass eine darauf getragene Last (L) durch ein Unterfahr-Shuttle (200) unterfahrbar ist bzw. durch ein Unterfahr-Shuttle (200) eine Last (L) darauf absetzbar ist, und/oder
wobei wenigstens einer der Übergabeplätze (104) derart eingerichtet ist, dass eine darauf getragene Last durch ein Regalbediengerät und/oder einen Schmalgangstapler (300) aufnehmbar bzw. durch ein Regalbediengerät und/oder einen Schmalgangstapler (300) eine Last (L) darauf absetzbar ist.

9. Übergabestation (100) nach einem der vorhergehenden Ansprüche,
wobei wenigstens einer der Übergabeplätze (104) mit einem Anschlag (126) versehen ist, welcher dazu eingerichtet ist, als Anlage für eine Last (L) in einer korrekten Pose für eine Aufnahme durch ein Lastentransportfahrzeug (300) zu dienen.

10. Übergabestation (100) nach einem der vorhergehenden Ansprüche, ferner umfassend wenigstens eine Zwischenposition, welche an dem Transportweg der Fördereinheit (108) zwischen zwei der Übergabeplätze (102, 104) angeordnet und dazu vorgesehen ist, eine Last (L) zeitweilig aufzunehmen.

11. System, gebildet aus einer Übergabestation (100) nach einem der vorhergehenden Ansprüche und wenigstens zwei Lastentransportfahrzeugen (200, 300) unterschiedlicher Typen, insbesondere ausgewählt aus einem Unterfahr-Shuttle (200), einem Regalbediengerät und einem Schmalgangstapler (300).

12. System nach dem vorhergehenden Anspruch,
ferner umfassend ein Lagerverwaltungssystem (400),
wobei Informationen über an der Übergabestation (100) aufgenommene bzw. von auf ihr abgestellte Lasten (L) lediglich von den Lastentransportfahrzeugen (200, 300) an das Lagerverwaltungssystem (400) übermittelt werden.

13. Verfahren zum Betreiben eines Systems nach einem der Ansprüche 11 und 12 für ein Übergeben einer Last (L) von einem ersten Lastentransportfahrzeug eines ersten Typs (200) zu einem zweiten Lastentransportfahrzeug eines zweiten Typs (300), umfassend die Schritte:
- Absetzen der Last (L) an einem ersten der Übergabeplätze (102) durch das erste Fahrzeug (200);
- Erfassen der Anwesenheit der Last (L) mittels des dem ersten Übergabeplatz (102) zugeordneten Belegungssensors (116);
- Betreiben der Fördereinheit (108) zum Transportieren der Last (L) von dem ersten Übergabeplatz (102) in Richtung eines zweiten der Übergabeplätze (104), sofern der dem zweiten Übergabeplatz (104) zugeordnete Belegungssensor (118) keine dort vorliegende Last (L) erfasst;
- Erfassen eines Erreichens des zweiten Übergabeplatzes (104) durch die Last (L) mittels des Positionssensors (122);
- Beenden des Betriebs der Fördereinheit (108); und
- Aufnehmen der Last (L) an dem zweiten Übergabeplatz (104) durch das zweite Lastentransportfahrzeug (300).

14. Verfahren nach Anspruch 13,
ferner umfassend ein Übermitteln von Informationen hinsichtlich des Absetzens der Last (L) an dem ersten Übergabeplatz (102) an das Lagerverwaltungssystem (400) durch das erste Lastentransportfahrzeug (200) und/oder umfassend ein Übermitteln von Informationen hinsichtlich des Aufnehmens der Last (L) an dem zweiten Übergabeplatz (104) an das Lagerverwaltungssystem (400) durch das zweite Lastentransportfahrzeug (300).

15. Verfahren nach Anspruch 13 oder 14,
ferner umfassend vor dem Betreiben der Fördereinheit (108) einen Schritt eines Überprüfens der Umgebung des ersten Übergabeplatzes (102) auf eine Abwesenheit des ersten Lastentransportfahrzeugs (200).
